# EUROPÄISCHE PATENTSCHRIFT

(11) **EP 1 649 188 B1**
(45) Veröffentlichungstag und Bekanntmachung des Hinweises auf die Patenterteilung: **05.11.2008**
(21) Anmeldenummer: 04763084.3
(22) Anmeldetag: 03.07.2004
(51) Int. Cl.: F16F 1/376, F16F 9/58

(54) **ZUSATZFEDER**
AUXILIARY SPRING
RESSORT AUXILIAIRE

(30) Priorität: 21.07.2003 DE 10333246
(43) Veröffentlichungstag der Anmeldung: 26.04.2006
(73) Patentinhaber: BASF SE, 67056 Ludwigshafen (DE)
(72) Erfinder: GEHRING, Tom, 49456 Bakum (DE); SCHORLING, Manfred, 49406 Eydelstedt (DE)
(86) Internationale Anmeldenummer: PCT/EP2004/007257
(87) Internationale Veröffentlichungsnummer: WO 2005/019681

(56) Entgegenhaltungen:
- DE-A- 10 041 359
- DE-U- 20 108 157
- US-A- 2 939 720
- US-B1- 6 296 237

## Beschreibung

Die Erfindung betrifft zylindrische, bevorzugt hohle elastische Federelemente (i), die auf mindestens einer Stirnseite einen bevorzugt umlaufenden, bevorzugt konzentrischen Rand (ii) aufweisen, wobei die Höhe des Randes (ii) variiert. Unter dem Ausdruck "Stirnseite" ist nicht die Mantelfläche des Zylinders zu verstehen, sondern mindestens eine, bevorzugt beide Endflächen, die sich bevorzugt senkrecht zu der Mantelfläche an den beiden axialen Enden des Zylinders befinden. Unter dem Ausdruck, dass "die Höhe des Randes (ii) variiert" ist zu verstehen, dass der Rand (ii) in axiale Richtung des Federelementes eine unterschiedliche, d.h. variable Ausdehnung aufweist. Unter "axiale Richtung" ist die Richtung parallel zur Höhe des Zylinders zu verstehen. Außerdem betrifft die Erfindung Automobilfahrwerke enthaltend die erfindungsgemäßen Federelemente, insbesondere Automobilfahrwerk, bei denen das erfindungsgemäße Federelement auf der Kolbenstange des Stoßdämpfers positioniert wird, d.h. die Kolbenstange in dem durchgängigen axial ausgerichteten Hohlraum des Federelementes (i) positioniert wird. Des weiteren bezieht sich die Erfindung auf Automobile, beispielsweise Personenkraftfahrzeuge, Lastkraftwagen, Busse, enthaltend die erfindungsgemäßen Federelemente.

Aus Polyurethanelastomeren hergestellte Federungselemente werden in Automobilen beispielsweise innerhalb des Fahrwerks verwendet und sind allgemein bekannt. Sie werden insbesondere in Kraftfahrzeugen als schwingungsdämpfende Federelemente eingesetzt. Dabei übernehmen die Federelemente eine Endanschlagfunktion, beeinflussen die Kraft-Weg-Kennung des Rades durch das Ausbilden oder Verstärken einer progressiven Charakteristik der Fahrzeugfederung. Die Nickeffekte des Fahrzeuges können reduziert werden und die Wankabstützung wird verstärkt. Insbesondere durch die geometrische Gestaltung wird die Anlaufsteifigkeit optimiert, dies hat maßgeblichen Einfluss auf den Federungskomfort des Fahrzeuges. Durch die gezielte Auslegung der Geometrie ergeben sich über der Lebensdauer nahezu konstante Bauteileigenschaften. Durch diese Funktion wird der Fahrkomfort erhöht und ein Höchstmaß an Fahrsicherheit gewährleistet.

Eine Schwierigkeit in der dreidimensionalen Ausgestaltung der Zusatzfedern besteht in einem häufig gewünschten, besonders weichen Einsatz der Kennlinie. Um diesen möglichst weichen Anlauf zu erreichen, ist es bekannt, mindestens ein Ende des Federelementes in Form einer umlaufenden Biegelippe auszugestalten, die einen Hohlraum weitgehend umschließ (siehe US-B-6 296 237). Diese Ausgestaltung, die man auch "Blütenform" bezeichnen kann, bewirkt zwar einen sehr weichen Einsatz der Zusatzfeder, weist aber auch einige Nachteile auf. So ist diese Form beispielsweise für besonders hohe Belastungen nur bedingt geeignet. Außerdem weist die Blütenform in der Herstellung wesentliche Nachteile auf, da der Hohlraum des Federelementes üblicherweise durch einen Kern definiert wird, von dem das Federelement nach der Aushärtung gezogen werden muss. Die dabei auftretenden Belastungen führen zu einem deutlichen Ausschuss. Ein weiterer Nachteil besteht in dem aufwendigen Entgraten.

Aufgabe der vorliegenden Erfindung war es somit, für eine Zusatzfeder, bevorzugt für eine Zusatzfeder für ein Automobilfahrwerk, eine dreidimensionale Form zu entwickeln, die einen möglichst weichen Einsatz ermöglicht und andererseits über deutlich verbesserte Eigenschaften in der Fertigung, insbesondere einen geringen Ausschuss, verfügt.

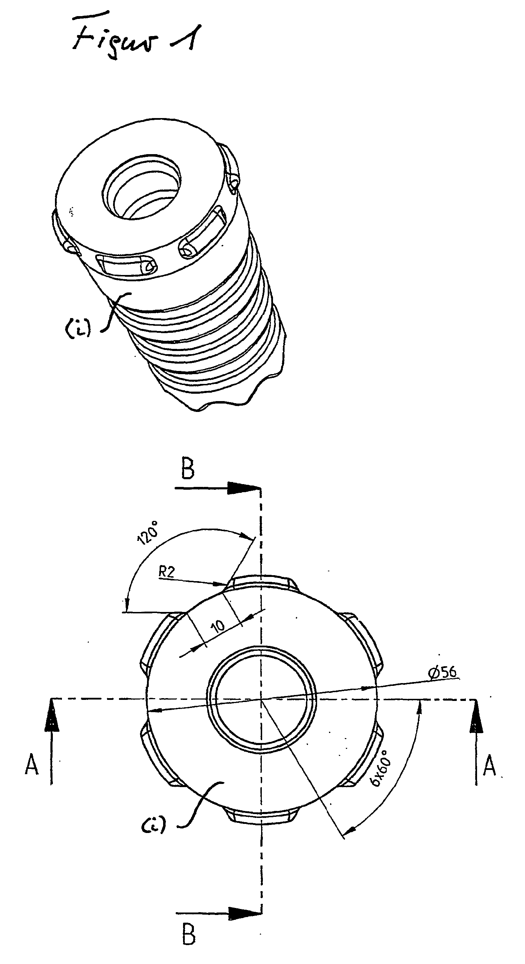

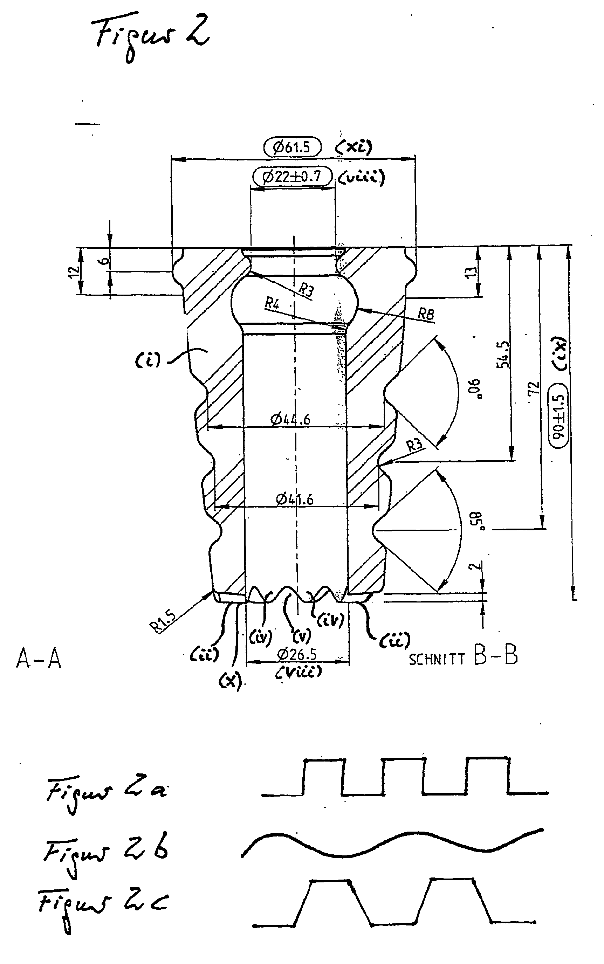

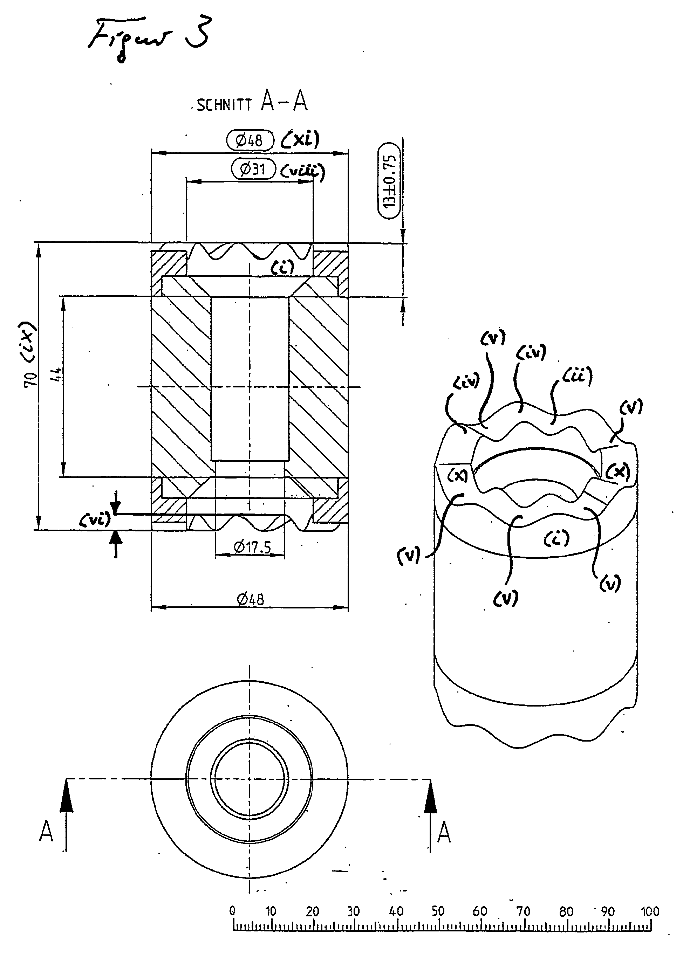

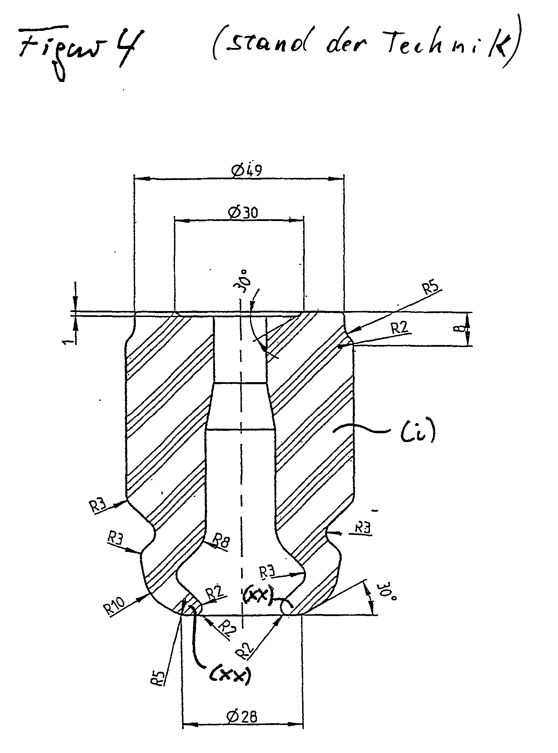

Diese Anforderungen werden durch die eingangs dargestellten Federelemente erfüllt. Die erfindungsgemäßen Federelemente sind beispielhaft im Detail in den Figuren 1, 2 und 3 dargestellt, wobei sich die Figuren 1 und 2 auf eine Form beziehen. Im Vergleich zu diesen erfindungsgemäßen Formen ist in der Figur 4 eine Vergleichsfeder dargestellt, die über die "Blütenform" und die umlaufende Biegelippe verfügt, die in der Figur mit (xx) gekennzeichnet ist. In allen Figuren sind die angegebenen Maße in [mm] angegeben. Anhand der Figur wird insbesondere die besondere, erfindungsgemäße Ausgestaltung des Randes (ii) deutlich. Dieser Rand weist in axialer Richtung, in der die Federung erfolgt, eine unterschiedliche, d.h. variable Ausdehnung auf, durch die das wellenförmige Erscheinungsbild des Randes geprägt wird. Aufgrund dieser wellenförmigen Ausgestaltung wird erreicht, dass bei der Einfederung am Anfang nur ein kleinerer Teil des Randes, d.h. die Wellenberge dämpfend wirken, während die Wellentäler erst dann zum Einsatz kommen, wenn das Federelement soweit gestaucht ist, dass auch diese in Kontakt mit dem abzufedernden Werkzeug kommen.

Bevorzugt sind somit Federelemente, bei denen die Stirnseite (x) des Randes (ii) wellenförmig, d.h. ohne Ecken und Kanten, beispielsweise sinusförmig, ausgebildet ist. Dabei weist der Rand (ii) bevorzugt zwischen 4 und 16 Wellenberge (iv) und Wellentäler (v) auf. Unter dem Ausdruck, dass die Stirnseite wellenförmig ausgestaltet ist, ist zu verstehen, dass die zylindrischen Federelemente in der Seitenansicht, d.h. in der Ansicht senkrecht auf die Mantelfläche des Zylinders, an mindestens einem axialen Ende eine Kontur, d.h. ein Profil aufweisen, das nicht "eben ist, sonders bevorzugt in axiale Richtung Erhebungen und Vertiefungen aufweist.

Alternativ kann das Federelement derart ausgestaltet sein, dass in der Seitenansicht, d.h. in der Ansicht auf die Mantelfläche des Zylinders, die Kontur von mindestens einem Ende nicht wellenförmig ausgestaltet ist, sondern eckige, z.B. rechteckige oder trapezförmige Erhebungen in axiale Richtung aufweist. Bevorzugt kann somit der Rand (ii) in der Seitenansicht ein eckiges Profil aufweist, d.h. beispielsweise eine rechteckige und/oder trapezförmige Kontur.

Beispielhafte Konturen sind in den Figuren 2a, 2b und 2c in der Seitenansicht dargestellt. Die Figur 2a beschreibt rechteckige Erhebungen auf der Stirnseite, die Figur 2b eine wellenförmige Kontur und die Figur 2c trapezförmige Erhebungen.

Die variable Ausdehnung des Randes (ii) kann auch durch den bevorzugten Unterschied in der maximalen Höhe des Randes und der minimalen Höhe des Randes, d.h. in der axialen Ausdehnung des Federelementes (i) beschrieben werden. Bevorzugt beträgt die Differenz (vi) zwischen der maximalen Höhe des Randes (ii), d.h. z.B. die Höhe des Wellenberges, und der minimalen Höhe (vii) des Randes (ii), d.h. die Höhe des Randes in Wellental, zwischen 2 mm und 10 mm, bevorzugt 3 mm und 8 mm, besonders bevorzugt 3 mm und 4 mm.

Der Rand (ii) weist bevorzugt einen Durchmesser (iii), d.h. eine Dicke zwischen 4 mm und 20 mm auf. Der Raum, der von dem Rand (ii) umfasst wird, besitzt bevorzugt einen Durchmesser (viii) zwischen 10 mm und 40 mm, besonders bevorzugt 10 mm bis 30 mm. Der Rand (ii) ist bevorzugt derart ausgestaltet, dass seine axiale Ausdehnung in Abhängigkeit vom Winkel variiert, in radialer Ausdehnung aber gleich bleibt. Bevorzugt weist somit die Stirnseite des Rande (ii) in radialer Richtung eine gleichbleibende Höhe auf, d.h. der Rand ist in radialer Richtung eben, wobei der gegenüberliegende Rand durchaus eine unterschiedliche Höhe aufweisen kann.

Das Federelement kann für Zusatzfedern allgemein übliche Maße, d.h. Längen und Durchmesser annehmen. Bevorzugt beträgt die Höhe (ix) des Federelementes (i), d.h. seine Länge in axialer Richtung, zwischen 30 mm und 200 mm, besonders bevorzugt 40 mm und 150 mm. Der Durchmesser (xi) des Federelementes (i) beträgt bevorzugt zwischen 30 mm und 100 mm, besonders bevorzugt 40 mm und 100 mm. Bevorzugt ist das Federelement hohl ausgestaltet, d.h. besonders bevorzugt weist das Federelement einen Hohlraum auf, der sich in axialer Richtung durch das gesamte Federelement zieht. Besonders bevorzugt beträgt der Durchmesser des Hohlraums zwischen 10 mm und 40 mm, besonders bevorzugt 10 mm bis 30 mm.

Die erfindungsgemäßen Federelemente (i) basieren bevorzugt allgemein bekannten Elastomeren, beispielweise Gummi oder Polyisocyanat-Polyadditionsprodukten, bevorzugt auf der Basis von zelligen Polyurethanelastomeren, die ggf. Polyharnstoffstrukturen enthalten können, besonders bevorzugt auf der Basis von zelligen Polyurethanelastomeren bevorzugt mit einer Dichte nach DIN 53 420 von 200 bis 1100, bevorzugt 300 bis 800 kg/m³, einer Zugfestigkeit nach DIN 53571 von ≥ 2, bevorzugt 2 bis 8 N/mm², einer Dehnung nach DIN 53571 von ≥ 300, bevorzugt 300 bis 700 % und einer Weiterreißfestigkeit nach DIN 53515 von ≥ 8, bevorzugt 8 bis 25 N/mm. Die erfindungsgemäßen Körper (i) basieren bevorzugt auf Elastomeren auf der Basis von Polyisocyanat-Polyadditionsprodukten, beispielsweise Polyurethanen und/oder Polyharnstoffen, beispielsweise Polyurethanelastomeren, die gegebenenfalls Harnstoffstrukturen enthalten können. Bevorzugt handelt es sich bei den Elastomeren um mikrozellige Elastomere auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm. Besonders bevorzugt besitzen die Elastomere die eingangs dargestellten physikalischen Eigenschaften. Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771.Die Herstellung erfolgt üblicherweise durch Umsetzung von Isocyanaten mit gegenüber Isocyanaten reaktiven Verbindungen.

Die Elastomere auf der Basis von zelligen Polyisocyanat-Polyadditionsprodukte werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten.

Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
a) Isocyanat,
b) gegenüber Isocyanaten reaktiven Verbindungen,
c) Wasser und gegebenenfalls
d) Katalysatoren,
e) Treibmittel und/oder
f) Hilfs- und/oder Zusatzstoffe, beispielsweise Polysiloxane und/oder Fettsäuresulfonate.

Die Oberflächentemperatur der Forminnenwand beträgt üblicherweise 40 bis 95°C, bevorzugt 50 bis 90°C.

Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dichtschließendes Formwerkzeug gebracht werden.

Die Formteile sind nach 5 bis 60 Minuten ausgehärtet und damit entformbar.

Die Menge des in das Formwerkzeug eingebrachten Reaktionsgemisches wird üblicherweise so bemessen, dass die erhaltenen Formkörper die bereits dargestellte Dichte aufweisen.

Die Ausgangskomponenten werden üblicherweise mit einer Temperatur von 15 bis 120°C, vorzugsweise von 30 bis 110°C, in das Formwerkzeug eingebracht. Die Verdichtungsgrade zur Herstellung der Formkörper liegen zwischen 1,1 und 8, vorzugsweise zwischen 2 und 6.

Die zelligen Polyisocyanat-Polyadditionsprodukte werden zweckmäßigerweise nach dem one shot-Verfahren mit Hilfe der Niederdruck-Technik oder insbesondere der Reaktionsspritzguss-Technik (RIM) in offenen oder vorzugsweise geschlossenen Formwerkzeugen, hergestellt. Die Reaktion wird insbesondere unter Verdichtung in einem geschlossenen Formwerkzeug durchgeführt. Die Reaktionsspritzguss-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

## Patentansprüche

1. Automobilfahrwerk enthaltend ein zylindrisches, elastisches Federelement (i), das auf mindestens einer Stirnseite einen Rand (ii) aufweist und das auf der Kolbenstange des Stoßdämpfers positioniert wird, **dadurch gekennzeichnet, dass** die Höhe des Randes (ii) variiert.

2. Federelement gemäß Anspruch 1, **dadurch gekennzeichnet, dass** die Stirnseite (x) des Randes (ii) wellenförmig ausgebildet ist.

3. Federelement gemäß Anspruch 1, **dadurch gekennzeichnet, dass** der Rand (ii) in der Seitenansicht ein eckiges Profil aufweist.

4. Federelement gemäß Anspruch 2, **dadurch gekennzeichnet, dass** der Rand (ii) zwischen 4 und 16 Wellenberge (iv) und Wellentäler (v) aufweist.

5. Federelement gemäß Anspruch 1, **dadurch gekennzeichnet, dass** die Differenz (vi) zwischen der maximalen Höhe des Randes (ii) und der minimalen Höhe (vii) des Randes (ii) zwischen 2 mm und 10 mm beträgt.

6. Federelement gemäß Anspruch 1, **dadurch gekennzeichnet, dass** der Rand (ii) eine Dicke zwischen 4 mm und 20 mm aufweist.

7. Federelement gemäß Anspruch 1, **dadurch gekennzeichnet, dass** der Raum, der von dem Rand (ii) umfasst wird, einen Durchmesser (viii) zwischen 10 mm und 40 mm aufweist.

8. Federelement gemäß Anspruch 1, **dadurch gekennzeichnet, dass** die Stirnseite des Randes (ii) in radialer Richtung eine gleichbleibende Höhe aufweist.

9. Federelement gemäß Anspruch 1, **dadurch gekennzeichnet, dass** das Federelement eine Höhe (ix) zwischen 30 mm und 200 mm aufweist.

10. Federelement gemäß Anspruch 1, **dadurch gekennzeichnet, dass** der Durchmesser (xi) des Federelementes (i) zwischen 30 mm und 100 mm beträgt.

11. Federelement gemäß Anspruch 1, **dadurch gekennzeichnet, dass** das Federelement auf Gummi oder Polyisocyanat-Polyadditionsprodukten basiert.

12. Federelement gemäß Anspruch 1, **dadurch gekennzeichnet, dass** das Dämpfungselement (i) auf zelligen Polyurethanelastomeren basiert.

13. Federelement gemäß Anspruch 1, **dadurch gekennzeichnet, dass** das Dämpfungselement (i) auf zelligen Polyurethanelastomeren mit einer Dichte von 200 bis 1100 kg/m³, einer Zugfestigkeit von ≥ 2 N/mm², einer Dehnung von ≥ 300 % und einer Weiterreißfestigkeit von ≥ 8 N/mm basiert.

## Claims

1. An automobile chassis comprising a cylindrical, elastic spring element (i), which has an edge (ii) on at least one extreme end and is positioned on the piston rod of the shock absorber, wherein the height of the edge (ii) varies.

2. The spring element according to claim 1, wherein the extreme end (x) of the edge (ii) is formed in an undulating manner.

3. The spring element according to claim 1, wherein the edge (ii) has an angular profile in side view.

4. The spring element according to claim 2, wherein the edge (ii) has between 4 and 16 undulation crests (iv) and undulation valleys (v).

5. The spring element according to claim 1, wherein the difference (vi) between the maximum height of the edge (ii) and the minimum height (vii) of the edge (ii) is between 2 mm and 10 mm.

6. The spring element according to claim 1, wherein the edge (ii) has a thickness of between 4 mm and 20 mm.

7. The spring element according to claim 1, wherein the space which is enclosed by the edge (ii) has a diameter (viii) of between 10 mm and 40 mm.

8. The spring element according to claim 1, wherein the extreme end of the edge (ii) has a constant height in the radial direction.

9. The spring element according to claim 1, wherein the spring element has a height (ix) of between 30 mm and 200 mm.

10. The spring element according to claim 1, wherein the diameter (xi) of the spring element (i) is between 30 mm and 100 mm.

11. The spring element according to claim 1, wherein the spring element is based on rubber or polyisocyanate polyaddition products.

12. The spring element according to claim 1, wherein the damping element (i) is based on cellular polyurethane elastomers.

13. The spring element according to claim 1, wherein the damping element (i) is based on cellular polyurethane elastomers with a density of from 200 to 1100 kg/m³, a tensile strength of ≥ 2 N/mm², an elongation of ≥ 300% and a tear propagation resistance of ≥ 8 N/mm.

## Revendications

1. Train de roulement pour automobile, qui contient un élément d'amortissement élastique (i) qui présente une bordure (ii) sur au moins un côté frontal et qui est placé sur la tige de piston de l'amortisseur de vibrations, **caractérisé en ce que** la hauteur de la bordure (ii) est variable.

2. Elément d'amortissement selon la revendication 1, **caractérisé en ce que** le côté frontal (x) de la bordure (ii) a une forme ondulée.

3. Elément d'amortissement selon la revendication 1, **caractérisé en ce que** vue latéralement, la bordure (ii) présente un profil polygonal.

4. Elément d'amortissement selon la revendication 2, **caractérisé en ce que** la bordure (ii) présente entre 4 et 16 sommets (iv) et creux (v) d'ondulation.

5. Elément d'amortissement selon la revendication 1, **caractérisé en ce que** la différence (vi) entre la hauteur maximale de la bordure (ii) et la hauteur minimale (vii) de la bordure (ii) est comprise entre 2 mm et 10 mm.

6. Elément d'amortissement selon la revendication 1, **caractérisé en ce que** la bordure (ii) présente une épaisseur comprise entre 4 mm et 20 mm.

7. Elément d'amortissement selon la revendication 1, **caractérisé en ce que** l'espace englobé par la bordure (ii) présente un diamètre (viii) compris entre 10 mm et 40 mm.

8. Elément d'amortissement selon la revendication 1, **caractérisé en ce que** le côté frontal de la bordure (ii) présente une hauteur constante dans la direction radiale.

9. Elément d'amortissement selon la revendication 1, **caractérisé en ce que** l'élément d'amortissement présente une hauteur (ix) comprise entre 30 mm et 200 mm.

10. Elément d'amortissement selon la revendication 1, **caractérisé en ce que** le diamètre (xi) de l'élément élastique (i) est compris entre 30 mm et 100 mm.

11. Elément d'amortissement selon la revendication 1, **caractérisé en ce que** l'élément d'amortissement est à base de caoutchouc ou de produits de polyaddition de polyisocyanate.

12. Elément d'amortissement selon la revendication 1, **caractérisé en ce que** l'élément d'amortissement (i) est à base d'élastomères cellulaires de polyuréthane.

13. Elément d'amortissement selon la revendication 1, **caractérisé en ce que** l'élément d'amortissement (i) est à base d'élastomères cellulaires de polyuréthane d'une masse spécifique de 200 à 1 100 kg/m³, d'une résistance à la traction ≥ 2 N/mm², d'un allongement ≥ 300 % et d'une résistance à la poursuite des déchirures ≥ 8 N/mm.
